# EUROPÄISCHE PATENTSCHRIFT

(11) **EP 0 867 640 B1**
(45) Veröffentlichungstag und Bekanntmachung des Hinweises auf die Patenterteilung: **18.07.2001**
(21) Anmeldenummer: 98102144.7
(22) Anmeldetag: 07.02.1998
(51) Int. Cl.: F16H 25/22

(54) **Vorrichtung zur Umwandlung einer Dreh- in eine Axialbewegung**
Device to convert a rotation into a translation
Dispositif convertisseur de rotation en translation

(30) Priorität: 29.03.1997 DE 19713351
(43) Veröffentlichungstag der Anmeldung: 30.09.1998
(73) Patentinhaber: Wittenstein GmbH & Co. KG, 97999 Igersheim (DE)
(72) Erfinder: Butsch, Michael, Prof. Dr.-Ing., 88718 Daisendorf (DE)
(74) Vertreter: Patentanwalts-Partnerschaft Rotermund + Pfusch

(56) Entgegenhaltungen:
- WO-A-97/03308

## Beschreibung

Die Erfindung betrifft eine Vorrichtung zur Umwandlung einer Dreh- in eine Axialbewegung nach dem Oberbegriff des Patentanspruchs 1.

Eine solche Vorrichtung ist in WO 97/03308 beschrieben. Bei der dortigen Vorrichtung treibt das Ritzel der Antriebswelle direkt die in dem Umlaufträger gelagerten Planetenrollen an, das heißt es besteht ein direkter Kraftschluß zwischen dem Antriebs-Ritzel und dem für den Eingriff des Ritzels an den Planetenrollen jeweils vorgesehenen Verzahnungsbereich. Mit einer solchen Vorrichtung ist eine hohe Übersetzung möglich, das heißt mit kleinen Antriebsmomenten können hohe Abtriebskräfte an dem Schubkörper erreicht werden.

Eine ähnliche Vorrichtung, bei der allerdings nicht die Planetenrollen, sondern der Umlaufträger mit den darin gelagerten Planetenrollen von dem Ritzel der Antriebswelle angetrieben wird, ist in der Patentanmeldung DE 196 00 238.9 beschrieben. Bei dieser Einrichtung wird eine zu der vorgenannten Einrichtung niedrigere Übersetzung erreicht, wodurch bei niedrigen Abtriebskräften an dem Schubkörper eine hohe Vorschubgeschwindigkeit erreicht werden kann.

Hiervon ausgehend beschäftigt sich die Erfindung mit dem Problem, den Anwendungsbereich der gattungsgemäßen Einrichtung zu vergrößern.

Gelöst wird diese Aufgabe durch eine Ausgestaltung nach den kennzeichnenden Merkmalen des Patentanspruchs 1.

Zweckmäßige Ausgestaltungen sind Gegenstand der Unteransprüche und werden bei der Beschreibung eines Ausführungsbeispieles noch näher erläutert werden.

Die Erfindung beruht auf dem Gedanken, die Vorteile der Einrichtungen aus den bei den eingangs genannten Druckschriften in einer einzigen Einrichtung zu vereinen und zu diesem Zweck einen Umschaltmechanismus zu schaffen, durch den ein und die gleiche Einrichtung frei wählbar einmal nach dem einen und zum anderen nach dem anderen Antriebsprinzip arbeiten kann.

Durch die Erfindung wird dieses Ziel in überraschend einfacher und wirksamer Weise erreicht.

Ein Ausführungsbeispiel ist in der Zeichnung dargestellt.

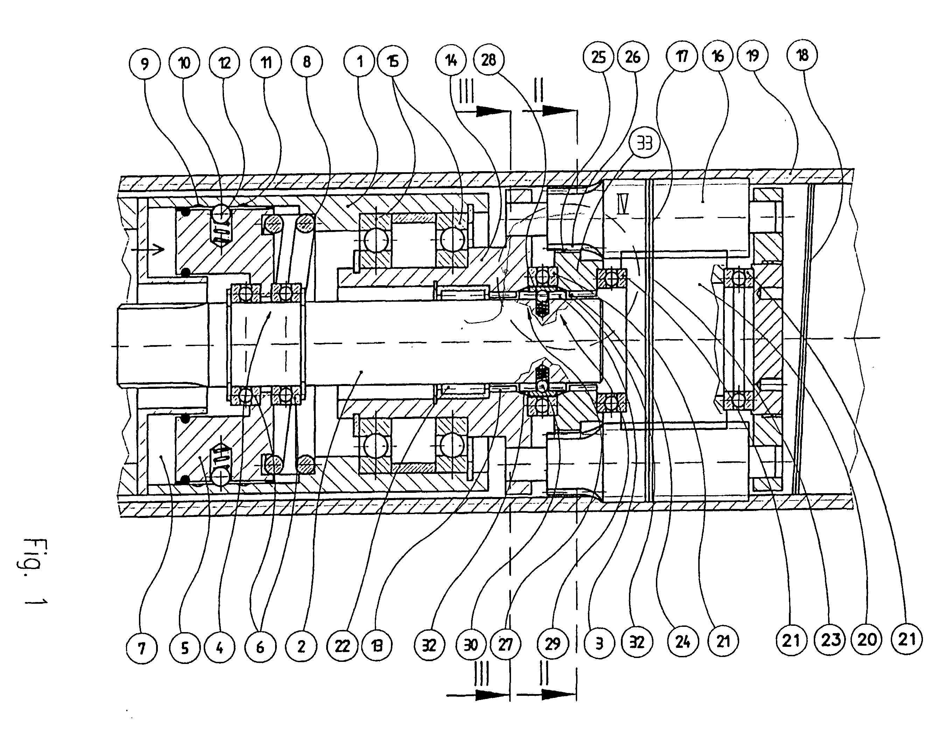

Es zeigen
- Fig. 1: einen Längsschnitt durch eine erfindungsgemäße Vorrichtung,

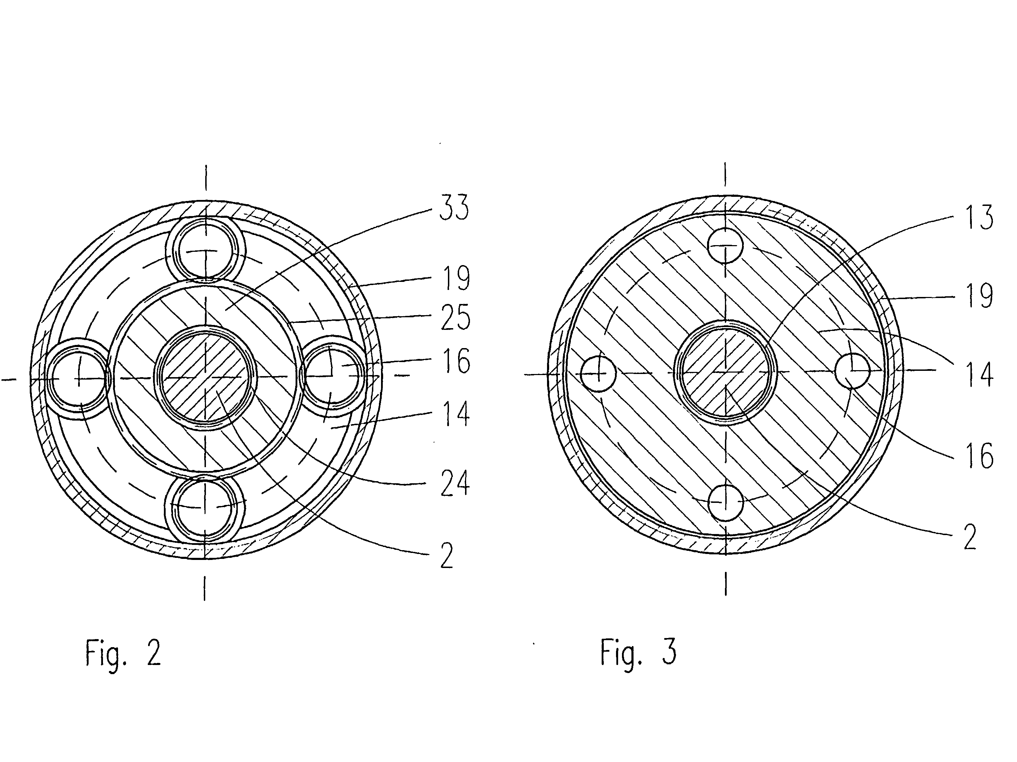

- Fig. 2: einen Schnitt durch die Vorrichtung nach Linie II-II in Fig. 1,
- Fig. 3: einen Schnitt durch die Vorrichtung nach Linie III-III in Fig. 1,

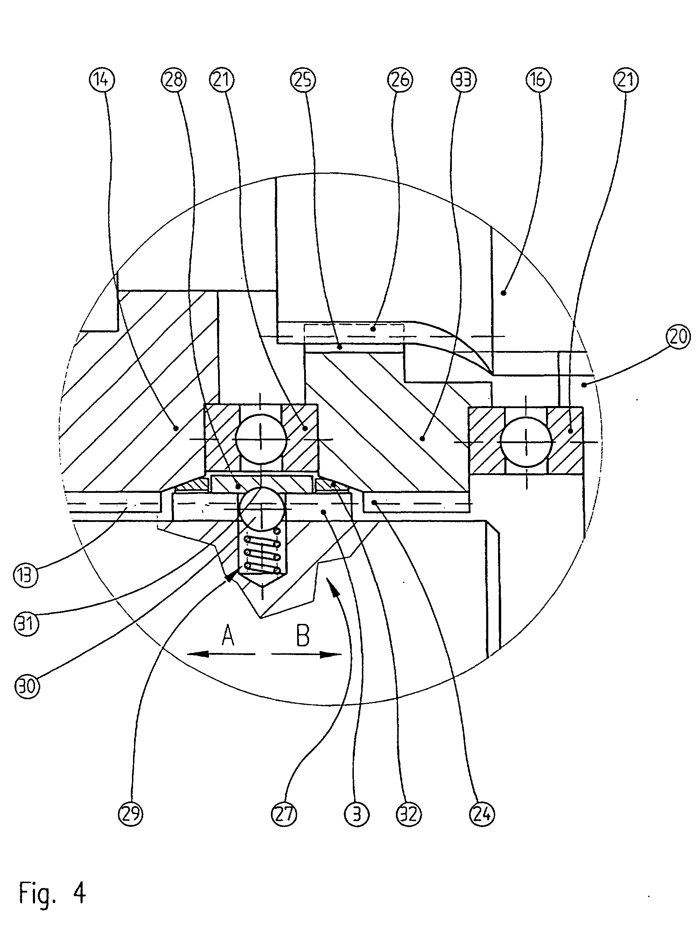

- Fig. 4: eine Vergrößerung des in der Fig. 1 mit IV bezeichneten strichpunktiert angegebenen Ausschnittes.

Eine von einem nicht dargestellten in einem Antriebsgehäuse 1 untergebrachten Elektromotor angetriebene Antriebswelle 2 ist mit einem Antriebs-Ritzel 3 versehen. Die Antriebswelle 2 ist in dem Antriebsgehäuse 1 axial in zwei Endstellungen verschiebbar. Die Richtung, in der eine erste Endstellung liegt, ist mit einem Pfeil A und die Richtung der zweiten Endstellung mit einem Pfeil B bezeichnet.

Das axiale Verschieben der Antriebswelle 2 erfolgt über eine Schalteinrichtung 4 innerhalb des Antriebsgehäuses 1. Die Schalteinrichtung 4 besitzt einen Schaltring 5, mit dem die Antriebswelle 2 über Axiallager 6 drehbar verbunden ist. Mit Hilfe des Schaltringes 5 kann die Antriebswelle 2 in ihre beiden Endstellungen sowie eine neutrale Mittelstellung zwischen diesen beiden Endstellungen verschoben werden. Die Betätigung des Schaltringes 5 erfolgt über eine Druckluftkammer 7, die in Richtung des nicht dargestellten Elektromotors axial an den Schaltring 5 angrenzt. Auf der axial gegenüberliegenden Seite ist der Schaltring 5 dem Druck einer sich in dem Antriebsgehäuse 1 abstützenden Schraubenfeder 8 ausgesetzt. Durch Druckbeaufschlagung der Druckluftkammer 7 ist der Schaltring 5 in Schaltrichtung B verschiebbar. Bei einer Entlastung der Druckluftkammer 7 verschiebt die Schraubenfeder 8 den Schaltring 5 in Schaltrichtung A. In einer Führungsbahn des Antriebsgehäuses 1 für den Schaltring 5 sind axial beabstandet drei Rastausnehmungen 9, 10 und 11 vorgesehen. In diese Rastausnehmungen 9 bis 11 greift bei entsprechenden Stellungen des Schaltringes 5 jeweils mindestens eine aus dem Außenumfang des Schaltringes 5 federbelastet herausragende Kugel 12 verrastend ein, um eine gewisse Fixierung des Schaltringes 5 in den betreffenden Stellungen zu erreichen. Bei diesen Stellungen handelt es sich um die beiden Schaltstellungen A und B sowie eine dazwischen liegende Neutralstellung. Durch Betätigen der Schalteinrichtung 4 kann das Antriebs-Ritzel 3 wahlweise zwei unterschiedliche Abtriebselemente antreiben oder außer Eingriff zu beiden Antriebselementen geschaltet werden.

Im folgenden wird zunächst einmal derjenige Betriebszustand der erfindungsgemäßen Einrichtung beschrieben, in dem das Antriebs-Ritzel 3 in die Endstellung A geschaltet ist. In diesem Zustand greift das Antriebs-Ritzel 3 in einen Verzahnungsbereich 13 eines Umlaufträgers 14 ein. Dieser Umlaufträger 14 ist über Wälzlager 15 in dem Antriebsgehäuse 1 radial und axial jeweils lagefixiert gelagert. In dem Umlaufträger 14 sind über dessen Umfang gleichmäßig verteilt vier Planetenrollen 16 jeweils drehbar gelagert. Diese Planetenrollen 16 sind über etwa dreiviertel ihrer Länge, gerechnet von ihren dem Elektromotor abgewandten Ende, mit umlaufenden Rillen 17 versehen. Mit diesen Rillen 17 greifen die Planetenrollen 16 in ein Innengewindeprofil 18 im Inneren eines rohrförmigen, den Umlaufträger 14 umschließenden Schubkörpers 19 ein. Bei einer Rotation des Umlaufträgers 14 mit dadurch bedingter Rotation der Planetenrollen 16 erfährt der Schubkörper 19 eine axiale Verschiebung in einer Richtung, die von dem Drehsinn des Umlaufträgers 14 bestimmt wird.

Im radialen Innenbereich des Umlaufträgers 14 sind ein erster Lagerring 33 sowie ein zweiter Lagerring 20 über jeweils Axiallager 21 drehbar gelagert. Die Axiallager 21 stützen sich dabei direkt oder indirekt jeweils innerhalb des Umlaufträgers 14 ab.

Die Antriebswelle 2 ist gegenüber dem Umlaufträger 14 über ein Nadellager 22 gelagert.

Bei der Schaltstellung A der Einrichtung kämmt der erste Lagerring 33 funktionslos in dem Verzahnungsbereich 26 der Planetenrollen 16. Der zweite Lagerring 20 hat in beiden Schaltstellungen A und B jeweils ausschließlich die Funktion einer axialen Lagefixierung der rotierenden Planetenrollen 16. Diese Funktion wird dadurch erreicht, daß der zweite Lagerring 20 mit in die Rillen 17 der Planetenrollen 16 eingreifenden Rillen 24 versehen ist.

In der Schaltstellung B der erfindungsgemäßen Einrichtung greifen die Antriebselemente wie folgt ineinander.

Das Antriebs-Ritzel 3 greift in einen Verzahnungsbereich 24 am Innenumfang des ersten Lagerringes 33 ein. Dadurch wird der erste Lagerring 33 von dem Antriebs-Ritzel 3 mit der Umdrehung der Antriebswelle 2 angetrieben, d.h. das Antriebs-Ritzel 3 und der erste Lagerring 33 sind in dieser Schaltstellung funktional ein Teil. Bei dieser Schaltstellung B greift das Antriebs-Ritzel 3 nicht in den Verzahnungsbereich 13 des Umlaufträgers 14 ein. Der von der Antriebswelle 2 angetriebene erste Lagerring 33 besitzt radial außen an seinem dem nicht dargestellten Elektromotor zugewandten Ende einen Außenverzahnungsbereich 25, mit dem dieser erste Lagerring 33 ständig in einem kämmenden Eingriff zu einem entsprechenden Verzahnungsbereich 26 an jeder der Planetenrollen 16 steht. In der Schaltstellung B werden die Planetenrollen 16 somit direkt, und nicht wie bei der Schaltstellung A über den Umlaufträger 14, angetrieben. Der Umlaufträger 14 dient in diesem Fall lediglich als eine Abstandshalterung der Planetenrollen 16 in Umfangsrichtung.

Zwischen den Schaltstellungen A und B ist das Antriebs-Ritzel 3 in eine neutrale Zwischenstellung schaltbar, in der es eingriffsfrei ist und rotieren kann.

Das Antriebs-Ritzel 3 ist mit einer Schalt-Synchronisationseinrichtung 27 versehen, deren Aufbau und Funktion wie folgt sind.

Im axialen Mittelbereich umschließt drehbar gelagert das Antriebs-Ritzel 3 einen Druckring 28. Über eine Rasteinrichtung 29 erhält dieser Druckring 28 eine gewisse kraftschlüssige Fixierung gegenüber dem Antriebs-Ritzel 3 in dessen Umfangs- und Axialrichtung. Erreicht wird dieser Kraftschluß durch eine radial aus dem Antriebs-Ritzel 3 federbelastet herausragende Kugel 30, die in eine kugelkalottenförmige zugeordnete Ausnehmung 31 am Innenumfang des Druckringes 28 eingreift. Axial angrenzend an den Druckring 28 sind in einerseits dem Umlaufträger 14 und andererseits in dem ersten Lagerring 33 jeweils Reibringe 32 vorgesehen.

Wird die Antriebswelle 2 aus der Neutrallage ihres Antriebs-Ritzels 3 in eine der beiden Schaltstellungen A oder B geschaltet, so ergibt sich durch die damit verbundene Axialverschiebung des Druckringes 28 ein Kraftschluß mit einem der beiden Reibringe 32. Hierdurch gleichen sich zuvor etwa ungleiche Drehgeschwindigkeiten der Antriebswelle 2 und des Umlaufträgers 14, beziehungsweise des ersten Lagerringes 33 an. Dieses Angleichen erfolgt in der Anfangsphase eines Schaltvorganges, in der die Kugel 30 der Rasteinrichtung 29 noch in einem kraftschlüssigen Eingriff mit der Ausnehmung 31 des Druckringes 28 steht. Bei fortschreitendem Schaltvorgang gelangt die Kugel 30 der Rasteinrichtung 29 in den jeweils axialen Endbereich des Druckringes 28, in dem keine Ausnehmung 31 mehr vorhanden ist. In diesem Zustand kann der Druckring 28 auf dem Antriebs-Ritzel 3 in Umfangsrichtung gleiten. Außer der vorstehend beschriebenen Synchronisationseinrichtung können selbstverständlich beliebige andere bekannte Synchronisationseinrichtungen eingesetzt werden. Die erfindungsgemäße Einrichtung ist im übrigen grundsätzlich auch vollständig ohne eine Synchronisationseinrichtung funktionsfähig.

Eine vorhandene Synchronisation kann nahezu lastfrei erfolgen, wenn die Steigungen der Rillen der Planetenrollen 16 und des Innengewindeprofiles des Schubkörpers 19 so gewählt werden, daß das System rückwärts selbsthemmend ist.

Außer der bei dem Ausführungsbeispiel beschriebenen Schalteinrichtung können auch beliebige andere an sich bekannte Schalteinrichtungen verwendet werden.

Die Funktion der erfindungsgemäßen Vorrichtung zur Umwandlung einer Dreh- in eine Axialbewegung ist wie folgt.

In die Schaltstellung A wird die Einrichtung geschaltet, wenn bei einer geringen Abtriebskraft an dem Schubkörper 19 eine hohe Vorschubgeschwindigkeit erwünscht ist. Eine Umschaltung in die Schaltstellung B wird vorgenommen, wenn eine hohe Abtriebskraft über den Schubkörper 19 erfolgen soll. In dem zuletzt genannten Fall ist die Vorschubgeschwindigkeit zwangsläufig geringer als bei gleicher Antriebsdrehzahl in der Schaltstellung A.

Die erfindungsgemäße Einrichtung kann beispielsweise bei Spritzgießmaschinen zum Verschieben und Schließen der Formhälften verwendet werden. Dabei wird die Einrichtung für das Verschieben der Formhälften, bei dem nur relativ geringe Kräfte aber hohe Vorschubgeschwindigkeiten benötigt werden, in der Schaltstellung A verwendet, während für das Schließen und Öffnen der Form die Schaltstellung B, bei der hohe Axialkräfte erzeugt werden, eingestellt wird.

Bei der erfindungsgemäßen Einrichtung lassen sich kleine Motoren in den rohrförmigen Schubkörper leicht integrieren und benötigen lediglich eine relativ kleine, preisgünstige Leistungselektronik.

## Patentansprüche

1. Vorrichtung zur Umwandlung einer Dreh- in eine Axialbewegung, bei der
- eine Antriebswelle (2) in einem ortsfesten Antriebsgehäuse (1) gelagert ist,
- die Antriebswelle (2) über ein mit dieser fest verbundenes Antriebs-Ritzel (3) in einem Umlaufträger (14) gelagerte Planetenrollen (16) antreibt,
- die Antriebswelle (2) und der Umlaufträger (14) um eine gleiche Achse drehen und die Antriebswelle (2) innerhalb des Umlaufträgers (14) rotiert,
- die Planetenrollen (16) in einem den Umlaufträger (14) koaxial umfassenden, zumindest radial innen rohrförmigen Schubkörper (19) kämmen,
- und der Schubkörper (19) und die Planetenrollen (16) ineinandergreifende Rillenprofile (17, 18) besitzen,
**dadurch gekennzeichnet,** daß das Antriebs-Ritzel (3) der Antriebswelle (2) wahlweise jeweils zum direkten Antrieb des Umlaufträgers (14) einerseits oder der Planetenrollen (16) andererseits schaltbar ist, wofür der Umlaufträger (14) und die Planetenrollen (16) jeweils mit einem Verzahnungsbereich (13) beziehungsweise (25) für den Antriebs-Eingriff des Antriebs-Ritzels (3) versehen sind.

2. Vorrichtung nach Anspruch 1,
**dadurch gekennzeichnet,**
daß das Antriebs-Ritzel (3) mit der Antriebswelle (2) axial zwischen zwei Endstellungen A beziehungsweise B verschiebbar ist, wobei das Antriebs-Ritzel (3) in seinen Endstellungen A, B jeweils als ein funktional starres Teil ausschließlich mit entweder dem Antriebs-Verzahnungsbereich (25) der Planetenrolle (16) oder dem Antriebs-Verzahnungsbereich (13) des Umlaufträgers (14) kraftschlüssig verbunden ist.

3. Vorrichtung nach Anspruch 1 oder 2,
**dadurch gekennzeichnet,**
daß in dem Umlaufträger (14) radial innerhalb der Planetenrollen (16) ein die Antriebswelle (2) umfassender erster Lagerring (33) axial verschiebefrei drehbar gegenüber den Planetenrollen (16) und der Antriebswelle (2) gelagert ist, wobei dieser erste Lagerring (33) an seinem Außenumfang mit einem in den Antriebs-Verzahnungsbereich (26) der Planetenrollen (16) eingreifenden Verzahnungsbereich (25) und an seinem Innenumfang mit einem Verzahnungsbereich (24) für den schaltbaren Eingriff des Antriebs-Ritzels (3) der Antriebswelle (2) versehen ist.

4. Vorrichtung nach einem der vorhergehenden Ansprüche,
**dadurch gekennzeichnet,**
daß der erste Lagerring (33) sich axial lediglich über etwa den Verzahnungsbereich (26) der Planetenrollen (16) erstreckt und daß ein zweiter Lagerring (20), der ebenfalls axial verschiebefrei drehbar gegenüber den Planetenrollen (16) und der Antriebswelle (2) gelagert ist, vorgesehen ist, wobei der zweite Lagerring (20) an seinem Außenumfang mit einem in das Rillenprofil (17) der Planetenrollen (16) eingreifenden Rillenprofil (23) versehen ist.

5. Vorrichtung nach einem der vorhergehenden Ansprüche,
**dadurch gekennzeichnet,**
daß der erste Lagerring (33) und/oder der zweite Lagerring (20) innerhalb des Umlaufträgers axial verschiebefrei gelagert ist bzw. sind.

6. Vorrichtung nach Anspruch 5,
**dadurch gekennzeichnet,**
daß der erste und zweite Lagerring (33 und 20) ein gemeinsames starres Teil (20/33)sind.

7. Vorrichtung nach Anspruch 5 oder 6,
**dadurch gekennzeichnet,**
daß die axial verschiebefreie Lagerung durch an den Lagerringen (33 und 20) endseitig jeweils angreifende Wälzlager (21) gegeben ist, wobei bei gleichzeitigem Vorhandensein eines ersten und eines zweiten Lagerringes (33 und 20) sich diese beiden Lagerringe über eines dieser Wälzlager (21) gegenseitig abstützen.

8. Vorrichtung nach einem der vorhergehenden Ansprüche,
**dadurch gekennzeichnet,**
daß die Antriebswelle (2) innerhalb des Umlaufträgers (14) oder innerhalb des Umlaufträgers (14) und einem der Lagerringe (20, 33) wälzgelagert ist.

9. Vorrichtung nach einem der vorhergehenden Ansprüche,
**dadurch gekennzeichnet,**
daß das Antriebs-Ritzel (3) zwischen axial angrenzenden Bereichen des ersten Lagerringes (33) einerseits und des Umlaufträgers (14) andererseits in seine beiden Endstellungen verschiebbar ist.

10. Vorrichtung nach einem der vorhergehenden Ansprüche,
**dadurch gekennzeichnet,**
daß zwischen dem Umlaufträger (14) und dem ersten Lagerring (33) bzw. einer Lagerringkombination (33/20) eine Schalt-Synchronisationseinrichtung (27) vorgesehen und bei einem Eingriffswechsel des Ritzels (3) zwischen Umlaufträger (14) und Lagerring (33) bzw. Lagerringkombination (33/20) aktiv ist.

11. Vorrichtung nach einem der vorhergehenden Ansprüche,
**dadurch gekennzeichnet,**
daß in dem antriebsseitigen Endbereich der Antriebswelle (2) ein Schaltring (5) auf der Antriebswelle (2) axial verschiebefrei drehbar aufsitzt, der mit seiner antriebsseitig axialen Stirnfläche an eine druckbeaufschlagbare, in dem Antriebsgehäuse (1) liegende Ringkammer angrenzt und an seinem anderen Ende axial federbelastet gegen das Antriebsgehäuse (1) abgestützt ist.

12. Vorrichtung nach Anspruch 11,
**dadurch gekennzeichnet,**
daß der Schaltring (5) in seinen Schaltstellungen (9, 10, 11) verrastbar ist.

## Claims

1. Device for converting a rotation into an axial movement in which
- a drive shaft (2) is mounted in a stationary drive housing (1),
- the drive shaft (2) drives planetary rollers (16) mounted in a peripheral support (14) via a drive pinion (3) rigidly connected to the drive shaft (2),
- the drive shaft (2) and the peripheral support (14) rotate round the same axis and the drive shaft (2) rotates inside the peripheral support (14),
- the planetary rollers (16) mesh in a thrust element (19) which coaxially surrounds the peripheral support (14) and is tubular, at least radially internally,
- and the thrust element (19) and the planetary rollers (16) have meshing groove profiles (17, 18)
characterised in that the drive pinion (3) of the drive shaft (2) can optionally be switched respectively to the direct drive of the peripheral support (14), on the one hand, or of the planetary rollers (16), on the other hand, for which the peripheral support (14) and the planetary rollers (16) are provided with a toothed region (13) or (25) respectively for drive engagement of the drive pinion (3).

2. Device according to claim 1, characterised in that the drive pinion (3) with the drive shaft (2) can be axially displaced between two end positions A and B, wherein the drive pinion (3) as a functionally rigid part, in its end positions A, B, is connected with non-positive fit exclusively to either the drive toothed region (25) of the planetary roller (16) or the drive toothed region (13) of the peripheral support (14).

3. Device according to claim 1 or 2, characterised in that in the peripheral support (14) radially inside the planetary rollers (16), a first bearing ring (33) comprising the drive shaft (2) is mounted axially non-displaceably and rotatably with respect to the planetary rollers (16) and the drive shaft (2), wherein this first bearing ring (33) is provided at its outer periphery with a toothed region (25) engaging in the drive toothed region (26) of the planetary rollers (16) and, at its inner periphery, is provided with a toothed region (24) for switchable engagement of the drive pinion (3) of the drive shaft (2).

4. Device according to one of the preceding claims, characterised in that the first bearing ring (33) extends axially over only approximately the toothed region (26) of the planetary rollers (16) and in that a second bearing ring (20) is provided which is also mounted axially non-displaceably and rotatably with respect to the planetary rollers (16) and the drive shaft (2), wherein the second bearing ring (20) is provided at its outer periphery with a groove profile (23) engaging in the groove profile (17) of the planetary rollers (16).

5. Device according to one of the preceding claims, characterised in that the first bearing ring (33) and/or the second bearing ring (20) is/are mounted axially non-displaceably inside the peripheral support.

6. Device according to claim 5, characterised in that the first and second bearing ring (33 and 20) are a common rigid part (20/33).

7. Device according to claim 5 or 6, characterised in that the axially non-displaceable mounting is provided by rolling bearings (21) acting at the end faces on the bearing rings (33 and 20), wherein these two bearing rings are mutually supported via one of these rolling bearings (21) when a first and second bearing ring (33 and 20) are simultaneously present.

8. Device according to one of the preceding claims, characterised in that the drive shaft (2) is mounted inside the peripheral support (14) or inside the peripheral support (14) and one of the bearing rings (20, 33) by means of rolling bearings.

9. Device according to one of the preceding claims, characterised in that the drive pinion (3) is displaceable between axially adjacent regions of the first bearing ring (33), on the one hand, and of the peripheral support (14), on the other hand, into its two end positions.

10. Device according to one of the preceding claims, characterised in that a switch synchronising device (27) is provided between the peripheral support (14) and the first bearing ring (33) or a bearing ring combination (33/20) and is active when there is an engagement change of the pinion (3) between the peripheral support (14) and bearing ring (33) or bearing ring combination (33/20).

11. Device according to one of the preceding claims, characterised in that in the end region of the drive shaft (2) on the drive side, a switching ring (5) is positioned axially non-displaceably and rotatably on the drive shaft (2), which switching ring (5) with its drive-side axial end face is adjacent to a pressure-loadable annular chamber in the drive housing (1) and, at its other end, is supported in an axially spring-loaded manner against the drive housing (1).

12. Device according to claim 11, characterised in that the switching ring (5) can be latched in its switching positions (9, 10, 11).

## Revendications

1. Dispositif de transformation d'un mouvement de rotation en un mouvement axial, dans lequel
- un arbre d'entraînement (2) est monté dans une boîte fixe d'entraînement (1),
- l'arbre d'entraînement (2) entraîne par l'intermédiaire d'un pignon d'entraînement (3) solidaire de lui des rouleaux satellites (16) montés dans un châssis tournant (14),
- l'arbre d'entraînement (2) et le châssis tournant (14) tournent autour d'un même axe et l'arbre d'entraînement (2) tourne à l'intérieur du châssis tournant (14),
- les rouleaux satellites (16) s'engrènent dans un corps de poussée tubulaire au moins intérieurement radialement (19) qui enveloppe coaxialement le châssis tournant (14),
- et le corps de poussée (19) et les rouleaux satellites (16) possèdent des profils rainurés (17, 18) qui s'emboîtent, caractérisé par le fait que le pignon d'entraînement (3) de l'arbre d'entraînement (2) peut être positionné pour l'entraînement direct, au choix, soit du châssis tournant (14), soit des rouleaux satellites (16), et le châssis tournant (14) et les rouleaux satellites (16) sont pour cela pourvus d'une partie dentée (respectivement 13 et 25) pour l'engrènement d'entraînement du pignon d'entraînement (3).

2. Dispositif selon la revendication 1, caractérisé par le fait que le pignon d'entraînement (3) est mobile axialement avec l'arbre d'entraînement (2) entre deux positions extrêmes A et B et est lié comme élément fonctionnellement rigide, dans une de ses positions extrêmes, exclusivement à la partie dentée d'entraînement (25) des rouleaux satellites (16), et, dans son autre position extrême, exclusivement à la partie dentée d'entraînement (13) du châssis tournant (14).

3. Dispositif selon l'une des revendications 1 et 2, caractérisé par le fait que dans le châssis tournant (14) est montée radialement à l'intérieur des rouleaux satellites (16), avec liberté de rotation mais sans liberté de déplacement axial par rapport aux rouleaux satellites (16) et à l'arbre d'entraînement (2), une première bague d'appui (33) qui entoure l'arbre d'entraînement (2) et est pourvue, sur son pourtour extérieur, d'une partie dentée (25) qui s'engage dans la partie dentée d'entraînement (26) des rouleaux satellites (16) et, sur son pourtour intérieur, d'une partie dentée (24) pour l'engrènement commutable du pignon d'entraînement (3) de l'arbre d'entraînement (2).

4. Dispositif selon l'une des revendications précédentes, caractérisé par le fait que la première bague d'appui (33) s'étend axialement seulement sur à peu près la partie dentée (26) des rouleaux satellites (16), et qu'il est prévu une deuxième bague d'appui (20) qui est également montée avec liberté de rotation mais sans liberté de déplacement axial par rapport aux rouleaux satellites (16) et à l'arbre d'entraînement (2) et est pourvue sur son pourtour extérieur d'un profil rainuré (23) qui s'engage dans le profil rainuré (17) des rouleaux satellites (16).

5. Dispositif selon l'une des revendications précédentes, caractérisé par le fait que la première bague d'appui (33) et/ou la deuxième bague d'appui (20) est ou sont monté(es) sans liberté de déplacement axial à l'intérieur du châssis tournant.

6. Dispositif selon la revendication 5, caractérisé par le fait que la première et la deuxième bagues d'appui (33 et 20) forment une pièce rigide commune (20/33).

7. Dispositif selon l'une des revendications 5 et 6, caractérisé par le fait que le montage sans liberté de déplacement axial est produit par des roulements (21) qui attaquent les bagues d'appui (33 et 20) du côté de leurs extrémités, et en cas d'existence simultanée d'une première et d'une deuxième bagues d'appui (33 et 20), ces deux bagues se supportent mutuellement par l'intermédiaire d'un de ces roulements (21).

8. Dispositif selon l'une des revendications précédentes, caractérisé par le fait que l'arbre d'entraînement (2) est monté sur roulements à l'intérieur du châssis tournant (14) ou à l'intérieur du châssis tournant (14) et d'une des bagues d'appui (20, 33).

9. Dispositif selon l'une des revendications précédentes, caractérisé par le fait que le pignon d'entraînement (3) est mobile, pour être mis dans ses deux positions extrêmes, entre des parties axialement contiguës d'une part de la première bague d'appui (33) et d'autre part du châssis tournant (14).

10. Dispositif selon l'une des revendications précédentes, caractérisé par le fait qu'entre le châssis tournant (14) et la première bague d'appui (33) ou une combinaison de bagues d'appui (33/20) est prévu un dispositif de synchronisation de commutation (27) qui agit lors d'un changement d'engrènement du pignon (3) entre le châssis tournant (14) et la bague d'appui (33) ou la combinaison de bagues d'appui (33/20).

11. Dispositif selon l'une des revendications précédentes, caractérisé par le fait que dans la partie d'extrémité côté entraînement de l'arbre d'entraînement (2), une bague de commutation (5) est montée avec liberté de rotation mais sans liberté de déplacement axial sur l'arbre d'entraînement (2) et est contiguë par sa face frontale axiale côté entraînement à une chambre annulaire située dans la boîte d'entraînement (1) et pouvant être mise sous pression et, à son autre extrémité, est appuyée axialement, chargée par un ressort, contre la boîte d'entraînement (1).

12. Dispositif selon la revendication 11, caractérisé par le fait que la bague de commutation (5) peut être arrêtée dans ses positions de commutation (9, 10, 11).
